# EUROPEAN PATENT SPECIFICATION

(11) **EP 1 541 826 B1**
(45) Date of publication and mention of the grant of the patent: **14.03.2007**
(21) Application number: 03028782.5
(22) Date of filing: 13.12.2003
(51) Int. Cl.: F01N 7/10, F02B 37/02, F02B 67/10

(54) **Turbocharger**
Turbolader
Turbocompresseur

(43) Date of publication of application: 15.06.2005
(73) Proprietor: Ford Global Technologies, LLC, Dearborn, MI 48126 (US)
(72) Inventor: Björnsson, Häkan, Sr, 413 11 Göteborg (SE)
(74) Representative: Petri, Stellan

(56) References cited:
- DE-A- 10 022 052
- DE-A- 19 635 870
- DE-C- 19 909 934
- US-A1- 2002 085 932
- US-A1- 2002 166 720

## Description

### Field of the invention

The present invention relates to an integrated turbocharger and exhaust manifold for an internal combustion engine. The integrated turbocharger and exhaust manifold comprises an inner ductwork and a turbine housing.

Further, the invention relates to a method for manufacturing an integrated turbocharger and exhaust manifold for an internal combustion engine.

### Prior art

In essence, turbocharging of an engine means that energy in the exhaust gases from a piston engine is recovered in order to increase the inlet pressure in an inlet manifold of the engine. The increased inlet pressure allows a higher power density for the engine, which means that a higher power and torque can be extracted from an engine of a given swept volume.

Turbocharged engines have been used extensively for the last decades as a way to increase torque and power output from piston engines of a given swept volume. Turbocharging has a number of advantages over so called naturally aspirated (NA) engines, i.e. non-turbocharged or compressor-fed engines, but there are also some major difficulties that must be overcome, especially for turbocharged gasoline engines. Usually, gasoline engines are spark ignited, and hence often referred to as SI engines.

There is a large difference between turbocharging of diesel (Compression Ignition, CI) engines and SI engines. For CI engines, it is virtually always better the higher the inlet pressure is; higher inlet pressure means more air in the cylinder, which means that it is possible to combust more fuel in the cylinder, which in turn leads to higher torque and power. The pressure difference, i.e. the pressure difference between the inlet manifold and the exhaust manifold, is often positive in turbocharged CI engines. Such positive pressure difference means that it is purely beneficial to use a turbo on a CI engine, since the increased inlet pressure actually helps driving the engine more than the increased pressure in the exhaust manifold brakes the engine. Furthermore, the exhaust temperature from CI engines rarely exceeds 700° C, which means that the material requirements for the turbocharger and the exhaust manifold are reasonable.

Turbocharging of SI engines is far more advanced and complicated; as is well known to persons skilled in the art of combustion engines, the inlet pressure of SI engines is limited by occurrence of knock, i.e. charge detonation, in the engine cylinders during combustion. Further, SI engines rarely use excess air during combustion, which leads to higher exhaust gas temperatures. Today, most engine manufacturers have a 980° C temperature limit of the exhaust gases, since the exhaust manifold and the turbocharger are not capable of handling higher temperatures. Except from constituting a strength problem, hot parts are a problem affecting the environment in the engine compartment due to heat radiation. As is well known to persons skilled in the art, a higher temperature of a body rapidly increases the radiation.

In order to reduce the above-mentioned problems, engine manufacturers apply a number of techniques; knocking combustion is avoided by using a lower compression ratio, or by delaying the spark advance. Both a low compression ratio and a delayed spark advance do however further increase the exhaust temperature, which rapidly will exceed the predetermined levels. The only way to decrease the exhaust temperature without inferring knocking combustion is to either "dilute" the combustion with excess air, or to use excessive amounts of fuel to cool the combustion. Of these two options, the latter is the most common, since an air diluted combustion gets very unstable and produces large amounts of unburned hydrocarbons, which will react with the oxygen in a downstream catalyst and ruin it.

Today, it is most common to use exhaust manifolds and turbochargers in die cast metal or alloy. In most cases, such manifolds and turbochargers are cast as two separate components. One large drawback with using cast metal for such components is that they get heavy (a cast metal manifold and turbo system for a 5-cylinder 2.5 litre engine weighs approximately 11-16 kg). To this should be added the problems occurring when assembling two components subject to high temperatures.

One further problem with die cast metal or alloy occurs if a higher temperature capability is desired; cast alloys capable of standing high temperatures tend to crack and are very expensive.

The high weight (or mass) of a prior art manifold/turbocharger assembly is even more detrimental when the demands for a catalyst is considered; due to reasons of catalyst endurance, the catalyst is almost always located downstream the turbocharger. A large mass upstream the catalyst gives problems when it comes to catalyst light-off; before the catalyst lights off, it is necessary to heat all components upstream the catalyst above the catalyst light-off temperature. As is readily understood, it takes longer time to heat a larger mass.

In order to increase the capability to withstand high exhaust temperatures, exotic metals or alloys have been used. These alloys are very expensive, and difficult to cast. As a rule of thumb, one can say that an increase in temperature capability from 980° C to 1050° C increases the component price by a factor of 2, at the time of application. As can be understood, this is a very large cost increase for a mass-produced product like a car.

As mentioned earlier, heat radiation from hot components constitute a major problem in the engine compartment, e.g. since fuel hoses and sensitive equipment is placed there. Furthermore, the efficiency of the turbocharger is negatively affected by the fact that heat is lost from the exhaust manifold.

Various turbochargers defining the state of the art are described in e.g. US-A-4 557 665, DE-C-100 22 052 and US2002/0085932. US2002/0085932, being considered the closest prior art, discloses an exhaust gas tyrbocharger for an internal combustion engine with an inner and an ouer shell, the outer shell covering only the turbocharger and not part of the exhaust manifold..

### Summary of the invention

The present invention solves the above-mentioned and other problems by providing a jacketed integrated turbo/exhaust manifold, wherein an outer shell covers a majority of the ductwork and the turbine housing.

Further, the invention provides a method for producing a jacketed integrated turbo/exhaust manifold, wherein in a first production stage, a manifold inlet flange, a bearing housing flange and the turbine outlet flange are held in mutually fixed positions as one of the outer shell portions is welded to said components.

Preferred embodiments of the present inventions are defined in the dependent claims.

When mounted on an engine, the jacketed integrated turbocharger and exhaust manifold performs the same task (leading hot exhaust gases from an engine outlet to the turbine wheel) as a prior art system. A prior art system comprises, as is well known by persons skilled in the art, a separate die cast manifold and a separate die cast or welded turbine housing. The jacketed integrated turbocharger and exhaust manifold according to the present invention provides however some major benefits that will be apparent in the following.

The interior ductwork and the outer shell should not be in contact with one another. Instead, the aim is to achieve an insulating layer of air between the interior ductwork and the outer shell. This insulating air layer significantly reduces the heat transfer from the interior ductwork (and hence from the hot exhaust gases from the engine) to the engine compartment. This is beneficial in several ways:
1. The reduced heat loss from the exhaust gases increases the efficiency of the turbocharger.
2. Less heat is radiated to the engine compartment.
3. The load bearing portion (the outer shell) is less subject to heat loads, and can hence be manufactured from a more cost-efficient metal or alloy.

Further, it is advantageous that the "efficient mass", i.e. the mass that must be heated prior to catalyst light-off, is significantly reduced, since a smaller mass to be heated allows for a faster catalyst light-off.

The jacketed integrated turbocharger and exhaust manifold according to an embodiment of the present invention also allows for a cost reduction compared to an ordinary, die cast, single component, high temperature manifold/turbocharger assembly. Furthermore, joining problems of the single components can be avoided, which significantly reduces the risk of leakage of exhaust gases prior to the catalyst.

### Brief description of the drawings

In the following, the present invention will be explained with reference to the appended drawings, wherein:
Fig 1 is an exploded view of an inner ductwork of the integrated turbocharger and exhaust manifold according to an embodiment of the present invention,
Fig 2 is an exploded view of an outer shell of the integrated turbocharger and exhaust manifold according to an embodiment of the present invention, and
Fig 3 is an assembled view of the integrated turbocharger and exhaust manifold according to an embodiment of the present invention.

### Description of embodiments

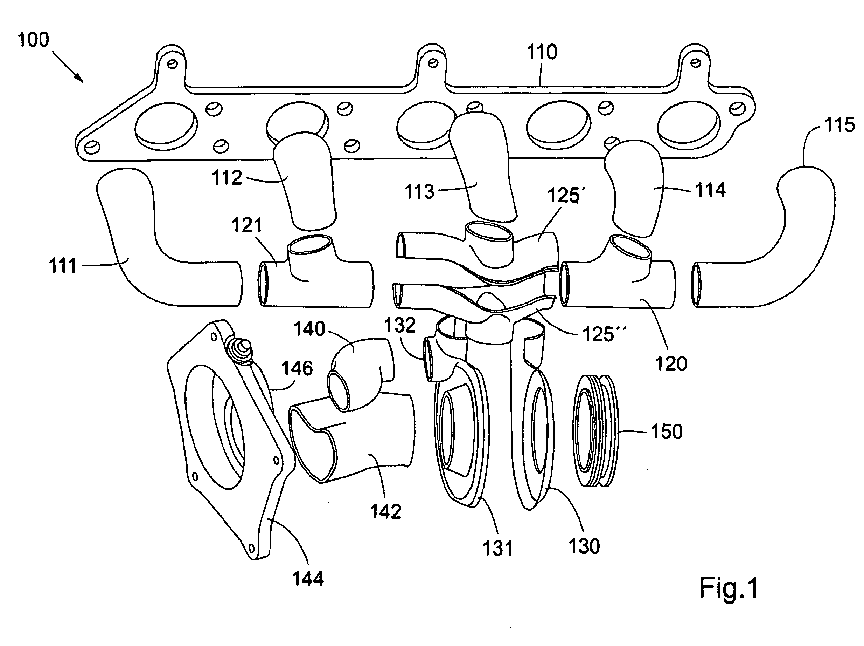

With reference to Fig 1, an inner ductwork of a jacketed integrated turbocharger and exhaust manifold 100 comprises a manifold inlet flange 110, and five primary pipes 111, 112, 113, 114, and 115. Further, it comprises two branched pipes 120, 121, one double-branched pipe 125 consisting of an upper portion 125' and a lower portion 125", a first turbine housing portion 130, and a second turbine housing portion 131. The second turbine housing portion includes a waste-gate opening 132. Still further, the inner ductwork of the jacketed integrated turbocharger and exhaust manifold 100 comprises a waste-gate duct 140, an exhaust duct 142, and a turbine outlet flange 144, comprising a waste-gate 146. Finally, the inner ductwork of the jacketed integrated turbocharger and exhaust manifold 100 includes a bearing housing flange 150.

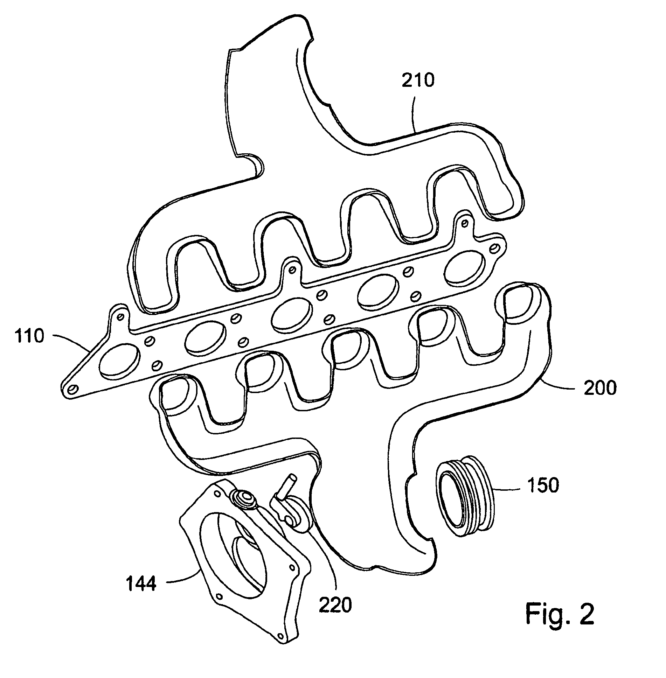

In Fig 2, components constituting an outer housing or shell for the inner ductwork of the jacketed integrated turbocharger and exhaust manifold 100 are shown. Those components are a lower outer shell portion 200 and an upper outer shell portion 210. Fig 2 also shows a waste-gate valve 220, the turbine outlet flange 144, the manifold inlet flange 110, and the bearing housing flange 150.

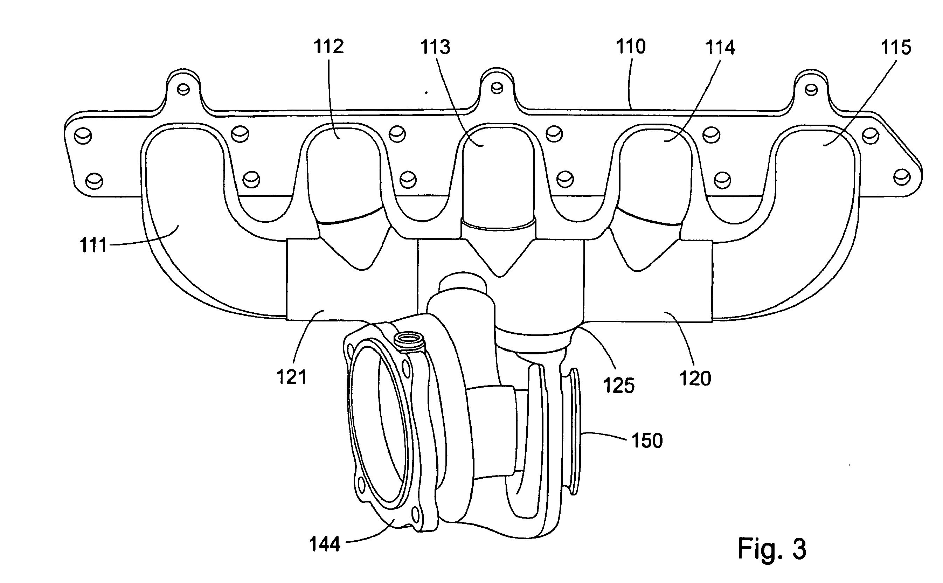

Fig 3 shows the above components, except the upper outer shell portion 210, in an assembled state.

Below, a joining procedure, e.g. welding, gluing or soldering, of the above components to a finished product will be described. In a first step connected to the joining procedure, hereinafter referred to as welding, the lower outer shell portion 200, the turbine outlet flange 144, the manifold inlet flange 110, and the bearing housing flange 150 are positioned in a correct manner relative to one another. While positioned, said components are welded to the lower outer shell portion 200. This positioning/welding procedure guarantees that the positioning of these parts will be correct in the finished product, since the lower outer shell portion 200 is manufactured rigid enough to avoid later mispositioning of said components.

In a second welding stage, the first turbine housing portion 130 and the second turbine housing portion 131 are welded together. Thereafter, the turbine housing comprising the turbine housing portions 130, 131 is welded to the bearing housing flange 150. During this operation, it is very important that the alignment between the bearing housing flange 150 and the turbine housing portions 130 and 131 is correct. In a later production stage, a turbine wheel (not shown) will be fitted into the turbine housing consisting of the turbine housing portions 130, 131. The journalling of the turbine wheel will take place in the bearing housing flange 150. Hence, it is very important that the alignment of these components is correct.

After the welding of the manifold inlet flange 110, the bearing housing flange 150, the turbine outlet flange 144, and the two turbine housing portions 130, 131 to the lower outer shell portion 200, the welding steps requiring high precision are finished. The only thing that remains is duct working for connecting those components to one another. How this ductworking can be done will be schematically described in the following. There are however many options and alternatives that will not be described since they are obvious for persons skilled in the art.

In a consecutive step, the double-branched pipe portions 125' and 125" are welded to form the double branched pipe 125. One branch of the double-branched pipe portion 125" is welded to a turbine inlet formed by the turbine housing portions 130 and 131, and one branch of the double branched pipe portion 125' is welded to one end of the primary pipe 113. The two remaining branches are welded to branches of the branched pipes 120 and 121, respectively.

In a further consecutive step, the primary pipes 111, 112, 114, and 115 are welded to the remaining branches on the branched pipes 120 and 121. The exhaust duct 142 and the waste gate duct 140 are welded to connect the second turbine housing portion 131 to the turbine outlet flange 144 and the waste gate 146, respectively.

Thereafter, ends of the primary pipes 111-115 are welded to the manifold inlet flange 110.

Finally, the outer shell of the jacketed integrated turbocharger 100 is completed by welding the upper outer shell portion 210 to the lower outer shell portion 200, the turbine outlet flange 144, and the bearing housing flange 150. The waste gate valve 220 can be mounted in the waste gate 146 at any occasion, but preferably after all the welding is performed.

As is obvious for persons skilled in the art of welding, the space for welding the interior ductwork is very limited, at least for welding from the outside. Hence, most connections are welded from the inside of the interior ductportions or pipeportions, entrance to the interior volumes being provided from the bearing housing flange 150, the manifold inlet flange 110, and the turbine outlet flange 144.

Only the "hot" side (or the turbine side) of the turbocharger is described in this application. The cold side (or compressor side) is not described at all, but can be a compressor of the well-known radial type, and be connected to the turbine wheel by means of a common shaft.

### Temperatures, materials and dimensions

As implied earlier, it is preferable that the interior ductwork, i.e. the primary pipes 111-115, the branched pipes 120, 121, the double-branched pipe 125, the turbine housing portions 130, 131, the waste gate duct 140, and the exhaust duct 142 are manufactured from a high temperature resistant sheet metal or alloy. One reason for choosing sheet material instead of cast material is that material inhomogenities are much less common in sheet material compared to cast material. The thickness of the sheet metal could be 0.5 -1.5 mm, preferably around 1 mm, which gives a total weight of the interior ductwork and turbine housing of around 1 Kg. The sheet metal or alloy components can be manufactured by any suitable means, e.g. pressing, cupping, or deep drawing.

It is preferable that the inner ductwork and the outer shell are separated by at least a couple of millimetres. In the preferred embodiment, the distance separating the inner ductwork and the outer shell varies from 1-10 mm, preferably within 2-5 mm. The space between the inner ductwork and the outer shell can be filled with air, which can be in communication with the ambient air. However, the insulation properties can be much improved if the space is filled with a gas comprising single atoms, e.g. noble gases such as helium (He), neon (Ne), argon (Ar), krypton (Kr) or xenon (Xe). A further measure to improve the insulation could be to evacuate the space between the inner ductwork and the outer shell, so that a degree of vacuum can be achieved.

The outer shell comprising upper and lower outer shell portions 211 and 210, respectively, is preferably made from low-grade sheet metal or alloy having a thickness of 1-3 mm, preferably around 2 mm, which results in total outer shell weight of around 5.4 kg. The total weight of the jacketed integrated turbocharger and exhaust manifold will hence be on the order of 8.75 Kg, which should be compared to the weight of a prior art solution, which is about 11-13 kg.

The jacketed integrated turbocharger and exhaust manifold should be able to handle an exhaust temperature of at least 1050 C. Tests have shown that the surface temperature of the outer shell at such an exhaust temperature does not exceed 800 C.

The material for the inner ductwork and the outer shell is crucial. In one preferred embodiment, the inner ductwork components are made from austenitic sheet metal of type 1.48.28 or the similar, and the outer shell is made from ferritic sheet metal of type 1.45.09 or the similar. Similar means in this context that the material should have similar properties in terms of temperature range, strength, machinability, etc.

One further embodiment of the invention comprises the use of an integrated turbocharger and exhaust manifold with a cast interior ductwork capable of withstanding high temperatures. On the cast interior ductwork, an outer shell according to the above description is attached. By this embodiment, it is possible to get the equal temperature behaviour of the integrated cast turbocharger and exhaust manifold as with the turbocharger and exhaust manifold described above. By the provision of the outer shell, it is possible to cast the interior ductwork with a small wall thickness, since the outer shell will absorb the mechanical load on the device.

In the embodiment described above with reference to the appended drawings, the jacketed integrated turbocharger and exhaust manifold is used on an inline five-cylinder engine. Obviously, the jacketed integrated turbocharger and exhaust manifold can also, with minor modifications, be used on engines with more or fewer cylinders, and on engines with different cylinder configurations, e. g. V-engines, boxer engines, W-engines, radial engines, etc.

## Claims

1. An integrated turbocharger and exhaust manifold (100) for an internal combustion engine, the integrated turbocharger and exhaust manifold (100) comprising an inner ductwork (111-115, 120, 121, 125) and a turbine housing (130, 131), wherein an outer shell (200, 210) is covering the turbine housing, **characterised in that** said outer shell (200, 210) covers a majority of the inner ductwork (111-115, 120, 121, 125).

2. The integrated turbocharger and exhaust manifold (100) according to claim 1, wherein the inner ductwork (111-115, 120, 121, 125) comprises primary pipes, (111-115), branched pipes (120, 121), one double branched pipe (125) comprising an upper portion (125') and a lower portion (125), said components being joined to form said inner ductwork (111-115, 120, 121, 125).

3. The integrated turbocharger and exhaust manifold (100) according to claim 1 or 2, wherein the distance between the inner ductwork (111-115, 120, 121, 125) and the outer shell (200, 210) is 1-10 mm.

4. The integrated turbocharger and exhaust manifold (100) according to any of the preceding claims, wherein the inner ductwork (111-115, 120, 121, 125) is manufactured from sheet metal.

5. The integrated turbocharger and exhaust manifold (100) according to claim 4, wherein the sheet metal is manufactured from austenitic 1.48.28 sheet metal or an equivalent material.

6. The integrated turbocharger and exhaust manifold (100) according to any of the preceding claims, wherein the inner ductwork (111-115, 120, 121, 125) has a thickness of about 1 mm.

7. The integrated turbocharger and exhaust manifold (100) according to any of the preceding claims, wherein the outer shell (200, 210) is manufactured from ferritic 1.45.09 sheet metal having a thickness of about 2 mm.

8. A method for manufacturing an integrated turbocharger and exhaust manifold for an internal combustion engine, the integrated turbocharger and exhaust manifold comprising an inner ductwork (111-115, 120, 121, 125), a turbine housing (130, 131), a manifold inlet flange (110), a bearing housing flange (150), a turbine outlet flange (144), and two outer shell portions (200, 210), **characterized in that** in a first production stage, the manifold inlet flange (110), the bearing housing flange (150), and the turbine outlet flange (144) are held in mutually fixed positions as one of the outer shell portions (200, 210) is welded to said components.

9. The method of claim 7, further comprising the steps of welding two turbine housing portions (130, 131) together to form a turbine housing (130, 131), and thereafter welding the turbine housing (130, 131) to the bearing housing flange (150).

10. The method of any of the claims 7 or 8, further comprising the step of welding the outer shell portions (200, 210) together to form an outer shell (200, 210) covering the inner ductwork (111-115, 120, 121, 125).

## Patentansprüche

1. Turbolader (100) mit integriertem Auspuffkrümmer für einen Verbrennungsmotor, wobei der Turbolader (100) mit integriertem Auspuffkrümmer ein inneres Rohrsystem (111-115, 120, 121, 125) und ein Turbinengehäuse (130, 131) umfasst, wobei eine Außenhülle (200, 210) das Turbinengehäuse bedeckt, **dadurch gekennzeichnet, dass** die Außenhülle (200, 210) einen Großteil des inneren Rohrsystems (111-115, 120, 121, 125) bedeckt.

2. Turbolader (100) mit integriertem Auspuffkrümmer nach Anspruch 1, bei dem das innere Rohrsystem (111-115, 120, 121, 125) Primärrohre (111-115), verzweigte Rohre (120, 121) und ein einen oberen Abschnitt (125') und einen unteren Abschnitt (125") umfassendes doppelt verzweigtes Rohr (125) umfasst, wobei diese Komponenten verbunden sind, um das innere Rohrsystem (111-115, 120, 121, 125) zu bilden.

3. Turbolader (100) mit integriertem Auspuffkrümmer nach Anspruch 1 oder 2, bei dem der Abstand zwischen dem inneren Rohrsystem (111-115, 120, 121, 125) und der Außenhülle (200, 210) 1-10 mm beträgt.

4. Turbolader (100) mit integriertem Auspuffkrümmer nach einem der vorhergehenden Ansprüche, bei dem das innere Rohrsystem (111-115, 120, 121, 125) aus Blech hergestellt ist.

5. Turbolader (100) mit integriertem Auspuffkrümmer nach Anspruch 4, bei dem das Blech aus austenitischem 1.4828-Blech oder einem äquivalenten Material hergestellt ist.

6. Turbolader (100) mit integriertem Auspuffkrümmer nach einem der vorhergehenden Ansprüche, bei dem das innere Rohrsystem (111-115, 120, 121, 125) eine Dicke von etwa 1 mm aufweist.

7. Turbolader (100) mit integriertem Auspuffkrümmer nach einem der vorhergehenden Ansprüche, bei dem die Außenhülle (200, 210) aus ferritischem 1.4509-Blech mit einer Dicke von etwa 2 mm hergestellt ist.

8. Verfahren zur Herstellung eines Turboladers mit integriertem Auspuffkrümmer für einen Verbrennungsmotor, wobei der Turbolader mit integriertem Auspuffkrümmer ein inneres Rohrsystem (111-115, 120, 121, 125), ein Turbinengehäuse (130, 131), einen Ansaugrohrflansch (110), einen Lagergehäuseflansch (150), einen Turbinenauslassflansch (144) und zwei Außenhüllenabschnitte (200, 210) umfasst, **dadurch gekennzeichnet, dass** in einem ersten Herstellungsstadium der Ansaugrohrflansch (110), der Lagergehäuseflansch (150) und der Turbinenauslassflansch (144) in relativ zueinander fixierten Positionen gehalten werden, wenn einer der Außenhüllenabschnitte (200, 210) an diese Komponenten angeschweißt wird.

9. Verfahren nach Anspruch 7, ferner umfassend die Schritte des Zusammenschweißens zweier Turbinengehäuseabschnitte (130, 131), um ein Turbinengehäuse (130, 131) zu bilden, und danach des Anschweißens des Turbinengehäuses (130, 131) an den Lagergehäuseflansch (150).

10. Verfahren nach einem der Ansprüche 7 oder 8, ferner umfassend den Schritt des Zusammenschweißens der Außenhüllenabschnitte (200, 210), um eine das innere Rohrsystem (111-115, 120, 121, 125) bedeckende Außenhülle (200, 210) zu bilden.

## Revendications

1. Turbocompresseur intégré et collecteur d'échappement (100) pour un moteur à combustion interne, le turbocompresseur intégré et le collecteur d'échappement (100) comprenant un système de gaines (111 à 115, 120, 121, 125) et un carter de turbine (130, 131), dans lequel une coque externe (200, 210) recouvre le carter de la turbine, **caractérisé en ce que** ladite coque externe (200, 210) recouvre la plus grande partie du système de gaines interne (111 à 115, 120, 121, 125).

2. Turbocompresseur intégré et collecteur d'échappement (100) selon la revendication 1, dans lequel le système de gaines interne (111 à 115, 120, 121, 125) comprend des conduites primaires (111 à 115), des conduites ramifiées (120, 121), une conduite à double ramification (125) comprenant une portion supérieure (125') et une portion inférieure (125"), lesdits composants étant reliés pour former ledit système de gaines interne (111 à 115, 120, 121, 125).

3. Turbocompresseur intégré et collecteur d'échappement (100) selon la revendication 1 ou 2, dans lequel la distance entre le système de gaines interne (111 à 115, 120, 121, 125) et la coque externe (200, 210) est de 1 à 10 mm.

4. Turbocompresseur intégré et collecteur d'échappement (100) selon l'une des revendications précédentes, dans lequel le système de gaines interne (111 à 115, 120, 121, 125) est constitué d'une tôle métallique.

5. Turbocompresseur intégré et collecteur d'échappement (100) selon la revendication 4, dans lequel la tôle métallique est constituée d'un métal austénitique 1.48.28 ou d'un matériau équivalent.

6. Turbocompresseur intégré et collecteur d'échappement (100) selon l'une des revendications précédentes, dans lequel le système de gaines interne (111 à 115, 120, 121, 125) présente une épaisseur d'environ 1 mm.

7. Turbocompresseur intégré et collecteur d'échappement (100) selon l'une des revendications précédentes, dans lequel la coque externe (200, 210) est constituée d'un métal ferritique 1.45.09 avec une épaisseur d'environ 2 mm.

8. Procédé de fabrication d'un turbocompresseur intégré et d'un collecteur d'échappement pour un moteur à combustion interne, le turbocompresseur intégré et le collecteur d'échappement comprenant un système de gaines interne (111 à 115, 120, 121, 125), un carter de turbine (130, 131), une bride d'entrée de collecteur (110), une bride de support du carter (150), une bride de sortie de turbine (144) et deux portions de coque externe (200, 210), **caractérisé en ce que**, dans première étape de fabrication, la bride d'entrée de collecteur (110), la bride de support du carter (150) et la bride de sortie de turbine (144) sont maintenues dans des positions fixes les unes par rapport aux autres lorsqu'une des portions de la coque externe (200, 210) est soudée auxdits composants.

9. Procédé selon la revendication 7, comprenant en outre les étapes de soudage des deux portions du carter de la turbine (130, 131) afin de former un carter de turbine (130, 131) puis l'étape de soudage du carter de turbine (130, 131) à la bride de support du carter (150).

10. Procédé selon l'une des revendications 7 ou 8, comprenant en outre l'étape de soudage des portions de la coque externe (200, 210) afin de former une coque externe (200, 210) recouvrant le système de gaines interne (111 à 115, 120, 121, 125) .
